# EUROPEAN PATENT APPLICATION

(11) **EP 4 636 856 A1**
(43) Date of publication of application: **22.10.2025**
(21) Application number: 23904044.7
(22) Date of filing: 15.12.2023
(51) Int. Cl.: H01M 4/36, H01M 4/38, H01M 4/62, H01M 4/48, H01M 4/587, H01M 4/134, H01M 10/44, H01M 10/0525

(54) **ANODE MATERIAL FOR LITHIUM ION CELL**

(30) Priority: 16.12.2022 KR 20220177473
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: WOO, Jung-Gyu, Pohang-si, Gyeongsangbuk-do 37671 (KR); YOU, Seung-Jae, Pohang-si, Gyeongsangbuk-do 37575 (KR); PARK, Sang-Eun, Hanam-si, Gyeonggi-do 12907 (KR)
(74) Representative: Pfenning, Meinig & Partner mbB
(86) International application number: PCT/KR2023/020729
(87) International publication number: WO 2024/128845

(57) **Abstract**

One aspect of the present invention is to provide a silicon-based anode material and a method for preparing same. The silicon-based anode material compensates for the low conductivity (10⁻⁴S/cm) of a Si source material due to the inclusion of a lithiated sulfonated polymer in the silicon-based anode material, and thus has high efficiency and capacity.

## Description

### Technical Field

The present disclosure relates to an anode material for a lithium-ion battery.

### Background Art

A lithium-ion battery is currently the most widely used secondary battery system, in a portable electronic communication device, an electric vehicle, and even in an energy storage device. Such a lithium-ion battery is a focus of attention, since the lithium-ion battery has the advantages such as a high energy density and operating voltage, and a relatively small self-discharge rate compared to commercial aqueous secondary batteries such as Ni-Cd, Ni-MH, or the like. However, improvements in electrochemical properties still remain as technical issues to be resolved, considering more efficient usage time in portable devices and improved energy characteristics in electric vehicles. Due thereto, much research and development is currently being conducted across four major raw materials: a cathode, an anode, an electrolyte, and a separator.

Among the raw materials, a graphite-based material exhibiting excellent capacity retention characteristics and efficiency may be commercialized for the anode. However, a relatively low theoretical capacity value (LiC₆: 372mAh/g) and a low discharge capacity ratio of the graphite-based material may be somewhat insufficient to meet the high energy and high power density characteristics of batteries required by a market.

Therefore, many researchers are interested in group IV elements (Si, Ge, Sn) in the periodic table, and thereamong, Si is particularly attractive as a material due to the characteristics of very high theoretical capacity (Li₁₅Si₄: 3600 mAh/g) and low operating voltage (~0.1 V vs. Li/Li+). However, Si may undergo significant volume expansion and contraction due to a reaction with lithium during charging and discharging, which may result in micronization of a silicon active material powder and poor electrical contact between the silicon active material powder and a current collector. This phenomenon may cause the capacity of the lithium-ion battery to rapidly decrease as charging and discharging cycles progress.

To overcome such problems, Patent Document 1 provides an anode material exhibiting improved cycle lifespan characteristics at high capacity compared to the case in which Si is used alone by including Si particles dispersed in SiO₂. However, in addition to Si and SiO₂, an intermediate phase called SiOx (0.5≤x<2) may be formed within the anode material, and some oxygen in the SiOx may react with Li to form Li₂O, a stable phase. Due thereto, irreversible capacity may occur, which may cause a problem in that the cycle lifespan characteristics of the anode material may deteriorate.

To solve such problems, research has been actively conducted recently to improve reversibility by combining Si and carbon. However, the Si-carbon composite anode material has the problem in that high capacity may not be implemented due to the problem of expansion of Si particles caused by repeated charging and discharging.

### (Prior art Document)

(Patent Document 1) Republic of Korea Publication of Patent Publication No. 10-2011-0029087

### Summary of Invention

### Technical Problem

An aspect of the present disclosure is to provide a silicon-based anode material having high capacity and high efficiency characteristics and a method for manufacturing the same.

### Solution to Problem

According to an aspect of the present disclosure, provided is an anode material for a lithium-ion battery including a silicon-based active material; a conductive material; and 8 to 25 wt% of a lithiated sulfonated polymer.

The silicon-based active material may be at least one selected from the group consisting of Si, SiOx (0.5≤x<2), and carbon composites thereof.

The conductive material may be CNT, graphene or graphite.

An average weight molecular weight (Mw) of the lithiated sulfonated polymer may be 10,000 or more and 3,000,000 or less, and the lithiated sulfonated polymer may be Li-PSS.

The anode material may include 40 to 80 wt% of silicon (Si).

According to an FT-IR spectrum of the anode material, peaks at 830 to 810 cm⁻¹ and peaks at 1075 to 1055 cm⁻¹ resulting from a symmetric vibration of S-O and peaks at 1180 to 1160 cm⁻¹ and peaks at 1372 to 1325 cm⁻¹ resulting from asymmetric and symmetric vibrations of Si=O may be observed.

An anode electrode including the anode material described above may have a capacity of 1400 mAh/g or more and an initial efficiency of 65% or more.

According to another aspect of the present disclosure, provided is a method for manufacturing an anode material for a lithium-ion battery, the method including: preparing a silicon-based active material, a conductive material, and a lithiated sulfonated polymer; mixing the silicon-based active material, the conductive material, and the lithiated sulfonated polymer to produce a mixture; spray drying the mixture to produce a composite; and heat treating the composite produced by the spray drying at a temperature within a range of 200 to 300°C. In addition, the manufactured anode material may include 8 to 25 wt% of a lithiated sulfonated polymer.

Si particles included in the silicon-based active material may be manufactured through a dry milling process, a wet milling method such as bead milling or ball milling, a deposition method (thermal deposition, plasma deposition, or the like) manufactured under a vacuum atmosphere, an electromagnetic melting method, or a co-evaporation method.

The wet milling method may be performed using an organic solvent including an aqueous solvent such as EtOH and IPA.

The Si particles included in the silicon-based active material may have a median diameter of 30 to 500 nm.

The mixing the silicon-based active material, the conductive material and the lithiated sulfonated polymer may be performed using a mechanofusion, VC or planetary mixer.

The anode material manufactured by the manufacturing method described above may include 40 to 80 wt% of silicon (Si).

### Advantageous Effects of Invention

As set forth above, according to an aspect of the present disclosure, a silicon-based anode material having high efficiency and capacity and a method for manufacturing the same may be provided, by adding a lithiated sulfonated polymer to a silicon-based anode material to compensate for the low conductivity (10⁻⁴ S/cm) of a Si raw material.

### Brief Description of Drawings

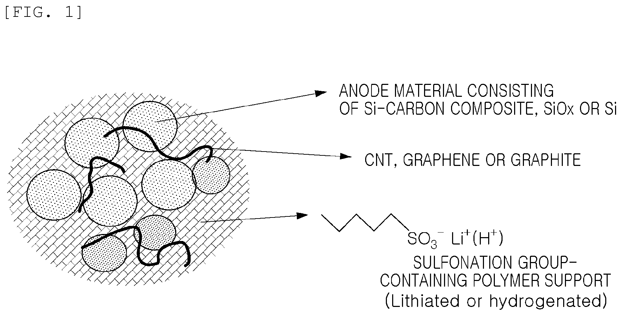

FIG. 1 is a conceptual diagram of an anode material according to the present disclosure.

### Best Mode for Invention

Hereinafter, preferred embodiments of the present disclosure will be described. However, the embodiments of the present disclosure may be modified in various forms, and the scope of the present disclosure should not be construed as being limited to the embodiments described below. In addition, the embodiments of the present disclosure are provided to those skilled in the art to further elaborate the present disclosure.

In the present specification, the term "including" is used to indicate that other components may be included, rather than excluding other components, unless specifically stated otherwise.

In addition, unless otherwise specified, a unit of % refers to a weight %.

According to an embodiment of the present disclosure, an anode material may include a silicon-based active material; a conductive material; and 8 to 25 wt% of a lithiated sulfonated polymer.

That is, in an embodiment of the present disclosure, a silicon-based anode material including a silicon-based active material is targeted. The silicon-based active material may be at least one selected from the group consisting of Si, SiOx (0.5≤x<2), and carbon composites thereof. The silicon-based active material may have a form of nanoparticles.

The silicon active material can implement a high-capacity battery compared to a carbon-based anode material by including Si particles. In addition, in an embodiment of the present disclosure, the Si particles may be fine particles having a median diameter (D50) of 30 to 500 nm. The median diameter refers to a diameter at the center of the diameter distribution obtained when measured by a diameter analyzer from Beckmann Coulter. The Si particles may include a carbon coating layer for surface stability.

As an example of the silicon active material, there may be a Si-carbon composite. The Si-carbon composite may be manufactured by coating a carbon material such as graphite, on Si particles, thereby preventing the Si particles from expanding and securing the conductivity of an anode material.

The anode material may further include a conductive material having excellent conductivity to improve cycling efficiency during charging and discharging, and the conductive material may include CNT, graphene or graphite.

The anode material may include 8 to 25 wt% of a lithiated sulfonated polymer. The sulfonated polymer used as a fuel cell ion exchange membrane forms a solid support, thereby allowing the silicon-based active material to be well formed on the support. In addition, by adding lithium-ions to the sulfonated group, the reversibility of the anode material may be improved, thereby improving the low efficiency of the silicon-based anode material. When a content of the lithiated sulfonated polymer is less than 8 wt%, such an effect may not be secured, and a more preferable lower limit of the content of the lithiated sulfonated polymer is 12%, and an even more preferable lower limit thereof is 14%. On the other hand, when the content of the lithiated sulfonated polymer exceeds 25 wt%, the content of Si particles and conductive material may be relatively reduced, resulting in poor long-term lifespan characteristics. More preferably, the content of the lithiated sulfonated polymer may be 23% or less.

The lithiated sulfonated polymer is not particularly limited in the scope that can achieve the above-described purpose, and a copolymer including a monomer having one or more lithiated sulfonated groups may also be included therein. In addition, an embodiment thereof is not limited thereto, but the lithiated sulfonated polymer may have an average weight molecular weight (Mw) of 10,000 or more and 3,000,000 or less. As an embodiment of the lithiated sulfonated polymer of the present disclosure, there may be Lithiated Poly Styrene Sulfonate (Li-PSS).

According to an embodiment of the present disclosure, the anode material may include 40 to 80 wt% of silicon (Si). When Si is included in an amount greater than 80 wt%, a problem of electrode expansion due to repeated charging and discharging may occur, resulting in a problem of a shortened cycle lifespan. A more preferable upper limit of the content of Si is 70%, and an even more preferable upper limit of the content of Si is 65%. On the other hand, in order to provide a high-capacity silicon-based anode material, it is preferable to include Si in an amount of 40 wt% or more. A more preferable lower limit of the content of Si is 45%, and an even more preferable lower limit of the content of Si is 60%.

Since the anode material includes a lithiated sulfonated group, according to an FT-IR spectrum of the present disclosure, peaks at 830 to 810 cm⁻¹ and peaks at 1075 to 1055 cm⁻¹ resulting from a symmetric vibration of SO and peaks at 1180 to 1160 cm⁻¹ and peaks at 1372 to 1325 cm⁻¹ resulting from asymmetric and symmetric vibrations of S=O can be observed.

An anode electrode for lithium-ions including the silicon-based anode material according to the present disclosure exhibits high capacity and high efficiency characteristics. Preferably, the anode electrode for lithium-ions including the anode material according to the present disclosure may have a capacity of 1400 mAh/g or more and an initial efficiency of 65% or more.

Hereinafter, a method for manufacturing an anode material of the present disclosure is described.

A method for manufacturing an anode material according to the present disclosure may include preparing a silicon-based active material, a conductive material, and a lithiated sulfonated polymer; mixing the silicon-based active material, the conductive material, and the lithiated sulfonated polymer to produce a mixture; spray drying the mixture to produce a composite; and heat treating the composite produced by the spray drying at a temperature within a range of 200 to 300°C. In addition, the manufactured anode material may include 8 to 25 wt% of a lithiated sulfonated polymer.

Si particles included in the silicon-based active material may be manufactured by a dry milling process, a wet milling method such as bead milling, or ball milling, a deposition method (thermal deposition, plasma deposition, or the like) manufactured under a vacuum atmosphere, an electromagnetic melting method, or a co-evaporation method. Preferably, a wet milling method that can minimize an oxidation degree of Si particles and facilitate diameter control may be used.

The wet milling method may be performed using an organic solvent including an aqueous system, and as a preferred embodiment, EtOH and IPA may be used to prevent oxidation of Si.

In addition, a median diameter of the Si particles included in the silicon-based active material may be 30 to 500 nm. When the median diameter of the Si particles exceeds 500 nm, the capacity may increase, but the lifespan of the electrode may be deteriorated due to the problem of expansion of an electrode. A more preferable upper limit of the median diameter of the Si particles is 250 nm, and an even more preferable upper limit of the median diameter of the Si particles is 200 nm. On the other hand, when the median diameter of the Si particles is less than 30 nm, there is a problem that the high capacity characteristics of the anode material may not be secured. More preferably, the median diameter of the Si particles may be 50 nm or more.

As described above, the anode material may include a lithiated sulfonated polymer to form a solid support while improving the reversibility of the anode material. In addition, as a non-limiting example, the lithiated sulfonated polymer included in the anode material may be Li-PSS. The Li-PSS may be manufactured through a reaction of Poly Styrene Sulfonic Acid (PSSA) and LiOH. In this case, organic solvents such as (Dimethyl sulfoxide DMSO) and Tetrahydrofuran (THF) may be used as solvents to dissolve Li-PSS.

Thereafter, the silicon-based active material, the conductive material, and the lithiated sulfonated polymer may be mixed in the presence of a solvent, the mixture may be spray dried to form a composite, and a solvent may be dried. In an embodiment of the present disclosure, the solvent may be a solvent used when pulverizing Si particles, but an embodiment thereof is not necessarily limited thereto.

By the mixing, the silicon-based active material, the conductive material, and the lithiated sulfonated polymer may be evenly dispersed. A mixing method within the scope that can achieve the purpose described above is not particularly limited, but as an embodiment, mixing may be performed using a mechanofusion, VC, or planetary mixer.

After spray drying, the produced composite may be heat treated at a temperature within a range of 200 to 300°C. The heat treatment operation is performed to form the lithiated sulfonated polymer into a solid support and to evenly distribute the polymer between the Si particles. When heat treatment is performed at a temperature lower than 200°C, the above-described effect may not be achieved. On the other hand, when heat treatment is performed at a temperature exceeding 300°C, the charging/discharging capacity and efficiency may decrease due to a side reaction of Si.

The silicon-based anode material manufactured by the manufacturing method described above may include 40 to 80 wt% of silicon (Si).

### Mode for Invention

PSSA and LiOH were added to a DMSO solvent at a mass ratio of 1:5, reacted at 90°C for 12 hours or more, and precipitated Li-PSSA was obtained using THF, which was washed using EtOH to obtain Li-PSS.

In this experiment, nano-sized Si was obtained in a slurry state using a wet bead mill using EtOH as a solvent. A median diameter of the Si particles was 100 nm. After mixing the slurry with CNT, the Li-PSS described above was additionally added to prepare a uniform slurry. The mixing was performed through a mechano-fusion process. A solid content thereof at this step was approximately 9 to 10%. Then, the slurry was spray dried to remove the solvent, and a composite of Si particles including Li-PSS, a precursor, and CNT was prepared. Thereafter, heat treatment was performed at a temperature within a range of 200 to 300°C to obtain a final product. A composition ratio of Si, CNT, and Li-PSS of the obtained final product is shown in Table 2.

FIG. 1 illustrates a conceptual diagram of an anode material according to the present disclosure.

Characteristic peaks were observed using an FT-IR device to confirm whether Li-PSS, a support, was generated after obtaining an active material, and the results are shown in Table 2. Peaks resulting from an symmetric vibration of S-O may be observed in the regions of 830 to 810cm⁻¹ and 1075 to 1055cm⁻¹, and peaks resulting from symmetric and asymmetric vibrations of Si=O may be observed in the regions of 1180 to 1160cm⁻¹ and 1372 to 1325cm⁻¹.

In order to measure the electrochemical properties, the Si-carbon composite anode active material was coated on a Cu current collector with a loading amount of 5 mg/cm² and an electrode density of 1.2 to 1.3 g/cc, and then rolled, and a CR2032-type of coin half-cell was manufactured and a charging-discharging test was performed in an operating voltage range of 0.005 V to 1.0 V. A binder used for electrode manufacturing was a polyacrylic acid (PAA) system, and an electrolyte was EC:DEC = 1:1 (1.0M LiPF₆) without additives. A current during charging-discharging was measured at 0.1C in an initial cycle. A capacity and initial efficiency measured through the process are shown in Table 1.

**[Table 1]**

| | Si content (weight %) | CNT content (weight %) | Li-PSS content (weight %) | Capacity (mAh/g) | Initial efficiency(%) |
|---|---|---|---|---|---|
| Inventive Example 1 | 70 | 20 | 10 | 1782 | 87.2 |
| Inventive Example 2 | 70 | 15 | 15 | 1898 | 89.8 |
| Inventiv e Example 3 | 70 | 10 | 20 | 1952 | 90.1 |
| Inventiv e Example 4 | 70 | 5 | 25 | 1956 | 89.2 |
| Comparat ive Example 1 | 70 | 0 | 30 | 1350 | 61.2 |
| Comparat ive Example 2 | 40 | 10 | 50 | 898 | 58.5 |
| Comparat ive Example 3 | 80 | 15 | 5 | 1889 | 48.5 |

**[Table 2]**

| | FT-IR [S-O]wave number(cm⁻¹) | FT-IR [S=O] wave number(cm⁻¹) |
|---|---|---|
| Inventiv e Example 1 | 825, 1068 | 1175, 1325 |
| Inventiv e Example 2 | 823, 1068 | 1172, 1348 |
| Inventiv e Example 3 | 828, 1071 | 1168, 1353 |
| Inventiv e Example 4 | 826, 1072 | 1173, 1356 |
| Comparat ive Example 1 | 826, 1075 | 1175, 1359 |
| Comparat ive Example 2 | 822, 1067 | 1170, 1350 |
| Comparat ive Example 3 | 822, 1067 | 1170, 1350 |

In the case of Comparative Examples 1 and 2 in which an Li-PSS content exceeded 25%, the results showed a capacity and initial efficiency was low. It was confirmed to be because a content of a conductive material decreased as the Li-PSS content increased, and a binding force of a support decreased.

In the case of Comparative Example 3, the low conductivity of Si could not be compensated for by including Li-PSS in amount of less than 8 wt%, resulting in a relatively low initial efficiency.

Meanwhile, in the case of an anode material not including Li-PSS at all, there is a problem in that it is difficult to form powder because the anode material has a structure without a support.

On the other hand, in Inventive Examples 1 to 4, since 8 to 25 wt% of a lithiated sulfonated polymer is included, the anode battery could have high capacity and excellent initial efficiency characteristics.

In addition, referring to Table 2 regarding an FT-IR spectrum, in all of Inventive Examples 1 to 4 and Experimental Examples 1 to 3, peaks at 830 to 810cm⁻¹ and peaks at 1075 to 1055cm⁻¹ resulting from a symmetric vibration of S-O and peaks at 1180 to 1160cm⁻¹ and peaks at 1372 to 1325cm⁻¹ resulting from asymmetric and symmetric vibrations of Si=O could be observed. As a result, it could be confirmed that Li-PSS having a lithiated sulfonated group was produced in all of the samples.

## Claims

1. An anode material for a lithium-ion cell, comprising:
a silicon-based active material;
a conductive material; and
8 to 25 wt% of a lithiated sulfonated polymer.

2. The anode material for a lithium-ion cell of claim 1, wherein the silicon-based active material is at least one selected from the group consisting of Si, SiOx (0.5≤x<2), and carbon composites thereof.

3. The anode material for a lithium-ion cell of claim 1, wherein the conductive material is CNT, graphene or graphite.

4. The anode material for a lithium-ion cell of claim 1, wherein an average weight molecular weight (Mw) of the lithiated sulfonated polymer is 10,000 or more and 3,000,000 or less.

5. The anode material for a lithium-ion cell of claim 1, wherein the lithiated sulfonated polymer is Li-PSS.

6. The anode material for a lithium-ion cell of claims 1 to 5, wherein 40 to 80 wt% of silicon (Si) is included.

7. The anode material for a lithium-ion cell of claims 1 to 5, wherein, according to an FT-IR spectrum of the anode material, peaks at 830 to 810 cm⁻¹ and peaks at 1075 to 1055 cm⁻¹ resulting from a symmetric vibration of S-O and peaks at 1180 to 1160 cm⁻¹ and peaks at 1372 to 1325 cm⁻¹ resulting from asymmetric and symmetric vibrations of Si=O are observed.

8. An anode electrode for a lithium-ion cell, comprising:
an anode material of claims 1 to 7.

9. The anode electrode for a lithium-ion cell of claim 8, wherein the anode electrode has a capacity of 1400 mAh/g or more and an initial efficiency of 65% or more.

10. A method for manufacturing an anode material for a lithium-ion cell, comprising:
preparing a silicon-based active material, a conductive material, and a lithiated sulfonated polymer;
mixing the silicon-based active material, the conductive material, and the lithiated sulfonated polymer to produce a mixture;
spray drying the mixture to produce a composite; and
heat treating the composite produced by the spray drying at a temperature within a range of 200 to 300°C,
wherein the manufactured anode material includes 8 to 25 wt% of a lithiated sulfonated polymer.

11. The method for manufacturing an anode material for a lithium-ion cell of claim 10, wherein Si particles included in the silicon-based active material are manufactured through a dry milling process, a wet milling method such as bead milling or ball milling, a deposition method (thermal deposition, plasma deposition, or the like) manufactured under a vacuum atmosphere, an electromagnetic melting method, or a co-evaporation method.

12. The method for manufacturing an anode material for a lithium-ion cell of claim 11, wherein the wet milling method is performed using an organic solvent including an aqueous solvent such as EtOH and IPA.

13. The method for manufacturing an anode material for a lithium-ion cell of claim 10, wherein the Si particles included in the silicon-based active material have a median diameter of 30 to 500 nm.

14. The method for manufacturing an anode material for a lithium-ion cell of claim 10, wherein the mixing the silicon-based active material, the conductive material, and the lithiated sulfonated polymer is performed using a mechanofusion, VC or planetary mixer.

15. The method for manufacturing an anode material for a lithium-ion cell of claim 10, wherein the manufactured anode material includes 40 to 80 wt% of silicon (Si).
